# EUROPEAN PATENT APPLICATION

(11) **EP 4 538 767 A1**
(43) Date of publication of application: **16.04.2025**
(21) Application number: 24816898.1
(22) Date of filing: 04.02.2024
(51) Int. Cl.: G02B 21/26, G02B 21/24, G02B 21/00

(54) **HIGH-PRECISION MICROSCOPIC SCANNER**

(71) Applicant: Suzhou Fengtai Medical Technology Co., Ltd., Suzhou, Jiangsu 215000 (CN)
(72) Inventor: YIN, Yuefeng, Suzhou, Jiangsu 215000 (CN); FU, Lan, Suzhou, Jiangsu 215000 (CN); ZHONG, Xue, Suzhou, Jiangsu 215000 (CN)
(74) Representative: Cabinet Chaillot
(86) International application number: PCT/CN2024/075660
(87) International publication number: WO 2025/001146

(57) **Abstract**

A high-precision microscopic scanner, comprising a machine base; the machine base is provided with a Y-axis cross roller sliding component via a ZY-axis common base plate, and one side of the machine base is provided with a Y-axis sliding drive component; the Y-axis cross roller sliding component is provided with an X-axis cross roller sliding component and an X-axis sliding drive component; the X-axis cross roller sliding component is provided with a glass slide rack component and a global light source component, and a middle of the machine base is provided with a lifting and focusing component; the ZY-axis common base plate is provided with a Z-axis sliding final assembly component, which is provided with an oil immersion lens component. The invention greatly improves the control accuracy during scanning by optimizing the design of the X-, Y- and Z-axis moving structures of the microscope scanner.

## Description

### TECHNICAL FIELD

The invention relates to the technical field of automated microscopes, and in particular to a high-precision microscopic scanner.

### BACKGROUND ART

The fully automatic microscope is a high-tech product that integrates optoelectronics and computing, and uses advanced distributed control technology and modular embedded structure to achieve automatic control of the stage XYZ three-axis and automatic adjustment of the light source brightness. It also uses software to realize fully automated functions such as panoramic automatic scanning, automatic puzzle, automatic return, synchronous browsing, and remote control, in order to improve work efficiency.

The fully automatic microscope adopts the standard RS232 communication interface. Users can easily adjust the field of view, focus and brightness of the microscope through computer control. The automatic focusing, XYZ three-axis motion automatic control, high and low magnification automatic conversion and other functions of the control system can realize the bow-shaped line-by-line motion scanning of the specimen, thereby realizing multi-field and fully automatic measurement and analysis of the image.

Because of its strong reliability, good stability and high precision, the fully automatic microscope is an indispensable component of the automatic analysis equipment of microscopic images. However, the control accuracy of the existing automatic microscope structure is 1-2 um, which can only be used for 20X or 40X dry (air) objective scanning, and cannot be used for immersion objective scanning above 60X. The latter requires the control accuracy of the automatic microscope structure to reach 0.2 um, which is also a problem that has been plaguing the high-precision microscopy scanner industry.

### SUMMARY OF THE INVENTION

In view of the defects of the prior art, the invention provides a high-precision microscopic scanner to greatly improve the control accuracy during scanning.

In order to solve the above technical problems and achieve the above technical effects, the invention is implemented through the following technical solutions:
a high-precision microscopic scanner, comprising a machine base, a Y-axis cross roller sliding component, a Y-axis sliding drive component, an X-axis cross roller sliding component, an X-axis sliding drive component, a glass slide rack component, a lifting and focusing component, a global light source component, a Z-axis sliding final assembly component, an oil immersion lens component, a global camera, an upper light source component, a fluorescent component, and a scanning camera;
the Y-axis cross roller sliding component is arranged on the machine base via a ZY axis common base plate, and the Y-axis sliding drive component is arranged on one side of the machine base and is connected to the Y-axis cross roller sliding component in transmission; the X-axis cross roller sliding component and the X-axis sliding drive component are both arranged on the Y-axis cross roller sliding component, and the X-axis sliding drive component is connected to the Y-axis sliding drive component in transmission; the glass slide rack component and the global light source component are arranged on the X-axis cross roller sliding component; the lifting and focusing component is arranged in a middle of the machine base and is located below the glass slide rack component; the Z-axis sliding final assembly component is arranged on the ZY-axis common base plate and is located on one side of an assembly of the Y-axis cross roller sliding component and the X-axis cross roller sliding component; the oil immersion lens component is arranged on the Z-axis sliding final assembly component and is located above the glass slide rack component; the fluorescent component is arranged above an assembly of the Y-axis cross roller sliding component and the X-axis cross roller sliding component via a gantry; a lower end of the fluorescent component is connected to the oil immersion lens component, and an upper end of the fluorescent component is connected to the scanning camera; the global camera and the upper light source component are both arranged on the gantry and located on one side of the fluorescent component.

Further, the machine base comprises a base bottom plate, and front and rear sides of a lower surface of the base bottom plate are respectively provided with a bottom plate front support block and a bottom plate rear support block; a marble base is provided between the bottom plate front support block and the bottom plate rear support block, and the marble base is fixedly fitted to the lower surface of the base bottom plate; left and right sides of the base bottom plate are respectively provided with a carrying handle, and each carrying handle is respectively fixedly connected to an end of the bottom plate front support block and the bottom plate rear support block on the corresponding side; the base bottom plate is provided with a Y-axis sliding drive component mounting hole for mounting the Y-axis sliding drive component and a lifting and focusing component mounting slot for mounting a bottom structure of the lifting and focusing component.

Further, the Y-axis cross roller sliding component comprises a Y-axis cross roller mounting lower base plate; an upper surface of the Y-axis cross roller mounting lower base plate is provided with a Y-axis sliding area upper top plate via two left and right pairs of Y-axis cross roller guide rails, and outer side surfaces of the two pairs of Y-axis cross roller guide rails are respectively provided with a Y-axis independent top screw plate; the two Y-axis independent top screw plates are respectively fixedly connected to left and right sides of a lower surface of the Y-axis sliding area upper top plate, and the top screws of the two Y-axis independent top screw plates are respectively aligned inwardly with outer side surfaces of the two pairs of Y-axis cross roller guide rails; at the same time, a Y-axis cross roller backrest limiting plate is provided between the two pairs of the Y-axis cross roller guide rails; a lower surface of the Y-axis cross roller backrest limiting plate is fixedly connected to an upper surface of the Y-axis cross roller mounting lower base plate, and an upper surface of the Y-axis cross roller backrest limiting plate does not contact the lower surface of the Y-axis sliding area upper top plate; left and right side surfaces of the Y-axis cross roller backrest limiting plate are respectively fixedly connected to inner side surfaces of the Y-axis cross roller guide rail on the corresponding sides; a middle of the Y-axis cross roller mounting lower base plate is provided with a first focus lens mounting hole for mounting the lifting and focusing component; a front and middle part of an upper surface of the Y-axis sliding area upper top plate is an X-axis cross roller sliding component mounting area for mounting the X-axis cross roller sliding component, a rear part of an upper surface of the Y-axis sliding area upper top plate is an X-axis sliding drive component mounting area for mounting the X-axis sliding drive component, and an upper surface of the Y-axis sliding area upper top plate located between the X-axis cross roller sliding component mounting area and the X-axis sliding drive component mounting area is a Y-axis sliding drive component connection area for connection with the Y-axis sliding drive component in transmission; a middle of the Y-axis sliding area upper top plate and the corresponding position of the Y-axis cross roller backrest limiting plate are both provided with a first focus lens avoidance hole for avoiding a top structure of the lifting and focusing component.

Further, the Y-axis sliding drive component comprises a crossbeam rod for flexibly and fixedly connecting with a connection area of the Y-axis sliding drive component; front and rear of the connection area of the Y-axis sliding drive component are respectively provided with a soft cushion block, and the crossbeam rod is clamped and connected to the Y-axis sliding area upper top plate through the front and rear soft cushion blocks; one end of the crossbeam rod is fixedly connected to a crossbeam rod right column support block via a crossbeam rod right column, and the crossbeam rod right column support block is slidably connected to a Y-axis sliding right rail fixed on the ZY-axis common base plate; the other end of the crossbeam rod is fixedly connected to a crossbeam rod left column adapter block via a crossbeam rod left column; the crossbeam rod left column adapter block is fixedly connected to a rack fixing plate; the rack fixing plate is slidably connected to a Y-axis sliding left rail fixed on a Y-axis motor fixing plate, and the Y-axis motor fixing plate is fixedly connected to the machine base; the Y-axis motor fixing plate is provided with a Y-axis motor via a Y-axis motor mounting bracket, and a motor shaft of the Y-axis motor is provided with a Y-axis gear; the rack fixing plate is provided with a Y-axis rack, and the Y-axis gear is meshed with the Y-axis rack; the rack fixing plate is provided with a spring fixing block, and a spring for tightening the rack fixing plate is provided between the spring fixing block and the Y-axis motor fixing plate.

Further, the X-axis cross roller sliding component comprises a first X-axis cross roller mounting lower base plate, whose upper surface is provided with a first X-axis sliding area upper top plate via two front and rear first X-axis cross roller guide rails; the first X-axis sliding area upper top plate is fixedly connected to upper surfaces of the front and rear pairs of the first X-axis cross roller guide rails by means of three fixing screws distributed in a triangle, and at the same time, a plurality of top screws are provided around each of the fixing screws for adjusting the horizontality of the first X-axis sliding area top plate on the front and rear pairs of the first X-axis cross roller guide rails; an X-axis cross roller backrest limiting plate is provided between the two pairs of the first X-axis cross roller guide rails; a lower surface of the X-axis cross roller backrest limiting plate is fixedly connected to an upper surface of the first X-axis cross roller mounting lower base plate, and an upper surface of the X-axis cross roller backrest limiting plate does not contact a lower surface of the first X-axis sliding area upper top plate; front and rear sides of the X-axis cross roller backrest limiting plate are respectively fixedly connected to inner side surfaces of the front and rear two pairs of the first X-axis cross roller guide rail; outer side surfaces of the two pairs of the first X-axis cross roller guide rails are respectively provided with a first X-axis independent top screw plate; the two first X-axis independent top screw plates are respectively fixedly connected to front and rear sides of the lower surface of the first X-axis sliding area upper top plate, and the top screws of the two first X-axis independent top screw plates are respectively aligned inwardly with outer side surfaces of the two first X-axis cross roller guide rails; a middle of the first X-axis cross roller mounting lower base plate and the corresponding position of the X-axis cross roller backrest limiting plate are both provided with a second focus lens avoidance hole for avoiding the top structure of the lifting and focusing component; a middle of the first X-axis sliding area upper top plate is provided with a glass slide rack mounting groove that goes through from top to bottom; a rear part of the first X-axis sliding area upper top plate is an X-axis sliding drive component connection area for connection with the X-axis sliding drive component in transmission; an upper surface of the X-axis cross roller backrest limiting plate is provided with a global light source component mounting groove for fixing the global light source component; one part of the global light source component is fixedly connected to the X-axis cross roller backrest limiting plate via the global light source component mounting groove, and the other part of the global light source component extends inwardly between the glass slide rack mounting groove and the second focus lend avoidance hole.

Further, one side frame of the glass slide rack mounting groove is provided with an electromagnetic adsorption component for adsorbing the glass slide rack component, which comprises an electromagnet mounting seat fixed on a side frame of the glass slide rack mounting groove; an upper surface of the electromagnet mounting seat is embedded with at least two electromagnet coils, and the electromagnet mounting seat is provided with an electromagnet terminal for connecting the electromagnet coils to an external power supply; an inner side of the electromagnet mounting seat is embedded with two steel balls for contacting a side of the glass slide rack component, and an upper surface of a frame of the glass slide rack mounting groove on the side opposite to the electromagnet mounting seat is embedded with a steel ball for contacting a lower surface of the glass slide rack component.

Further, the X-axis sliding drive component comprises an X-axis cushion clamping plate arranged in the X-axis sliding drive component mounting area at a rear of an upper surface of the Y-axis sliding area upper top plate; the X-axis cushion clamping plate is provided with an X-axis power fixing plate, and a front part of an upper surface of the X-axis power fixing plate is provided with a second X-axis cross roller mounting lower base plate; front and rear sides of an upper surface of the second X-axis cross roller mounting lower base plate are provided with a second X-axis sliding area upper top plate via two pairs of second X-axis cross roller guide rails, and outer side surfaces of the two pairs of the second X-axis cross roller guide rails are respectively provided with a second X-axis independent top screw plate; the two second X-axis independent top screw plates are respectively fixedly connected to front and rear sides of a lower surface of the second X-axis sliding area upper top plate, and the top screws of the two second X-axis independent top screw plates are respectively aligned inwardly with outer side surfaces of the two pairs of second X-axis cross roller guide rails; a rear of an upper surface of the X-axis power fixing plate is provided with an X-axis linear motor via a pair of left and right linear motor mounting seats, and the X-axis linear motor is fixedly connected to a rear of the second X-axis sliding area upper top plate via an X-axis movable connecting piece; the second X-axis sliding area upper top plate is provided with an X-axis moving push block on both sides, and at the same time, the X-axis sliding drive component connection area at a rear of the first X-axis sliding area upper top plate is provided with an X-axis moving push block fixing piece; left and right sides of the X-axis moving push block fixing piece are respectively provided with an X-axis moving push block micro-motion lifting rail, and the two X-axis moving push blocks are respectively connected to the two X-axis moving push block micro-motion lifting rails.

Further, the glass slide rack component comprises a glass slide rack main board, and one side thereof is provided with a glass slide rack handle; the glass slide rack main board is provided with at least one glass slide mounting recess for placing a glass slide, and a middle part of each glass slide mounting recess is a hollow structure; a frame of each of the glass slide mounting recesses is provided with a glass slide end limiting plate, a glass slide inner side support block, and a glass slide outer side elastic sheet-spring composite push block structure; the glass slide inner side support block and the glass slide outer side elastic sheet-spring composite push block structure are arranged relative to each other; a frame of each glass slide mounting recess is provided with a glass slide bottom support protrusion and two top screw holes, and a glass slide top screw is provided in each of the two top screw holes; the glass slide bottom support protrusion and the two glass slide top screws are distributed in an inverted triangle.

Further, the lifting and focusing component comprises a T-shaped frame; a rear of an upper end surface of the T-shaped frame is provided with a condenser lifting motor, and a front of the upper end surface of the T-shaped frame is provided with a ball screw; a motor shaft of the condenser lifting motor is provided with a driving wheel, and a top of the ball screw is provided with a driven wheel; a synchronous belt is wound between the driving wheel and the driven wheel; a front surface of a vertical plate of the T-shaped frame is provided with a ball screw auxiliary guide rail, and a slider thereon is fixedly connected to a nut on the ball screw; the nut of the ball screw is provided with a condenser support plate via a condenser lifting block, the condenser support plate is provided with a condenser adjustment upper plate via a condenser adjustment intermediate plate, the condenser adjustment upper plate is provided with a condenser via a condenser connection tube; one side of the vertical plate of the T-shaped frame is provided with a condenser limiting micro photoelectric switch, and the nut of the ball screw is provided with a condenser limiting piece for inductively cooperating with the condenser limiting micro photoelectric switch; a lower light source component is provided directly below the condenser support plate, and the lower light source component is fixedly connected to the ZY-axis common base plate.

Further, the Z-axis sliding final-assembly component comprises a Z-axis column fixed on the ZY-axis common base plate, and the Z-axis column is located on one side of an assembly of the Y-axis cross roller sliding component and the X-axis cross roller sliding component; an inner side surface of the Z-axis column is provided with a Z-axis ball screw via a pair of upper and lower bearing seats, and an inner side surface of the Z-axis column is provided with a Z-axis guide rail parallel to the Z-axis ball screw on the left and right sides; a top of the Z-axis column is provided with a Z-axis drive motor, and a motor shaft of the Z-axis drive motor is connected to a top of the screw of the Z-axis ball screw; the nut of the Z-axis ball screw is provided with a Z-axis lifting plate, and the Z-axis lifting plate is fixedly connected to a slider on the Z-axis guide rail; the Z-axis lifting plate is provided with a Z-axis bracket, and a side of the Z-axis bracket is provided with a Z-axis cantilever via two pairs of Z-axis cross roller guide rails; a top of the Z-axis bracket is provided with a piezoelectric ceramic stack displacement device hanger, and a pen-type piezoelectric ceramic stack displacement device is connected between the piezoelectric ceramic stack displacement device hanger and the Z-axis cantilever; the Z-axis cantilever is provided with an oil immersion lens mounting hole, which is provided with an oil immersion lens adjustment plate; the oil immersion lens adjustment plate is fixedly connected to the Z-axis cantilever via three locking screws distributed in a triangle, and at the same time, one side of each locking screw is provided with a top screw for adjusting the horizontality of the oil immersion lens adjustment plate in the oil immersion lens mounting hole.

Further, the oil immersion lens component comprises an objective lens, an elastic oil drip nozzle, and an oil drip nozzle fixing block; the objective lens is mounted in the oil immersion lens mounting hole on the Z-axis cantilever, and is fixedly connected to the oil immersed lens adjustment plate; the oil drip nozzle fixing block is fixed on a lower surface of the Z-axis cantilever; the elastic oil drip nozzle is mounted on the oil drip nozzle fixing block and is attached to a side wall of the objective lens through an oil drip tube pressing sheet, with an oil outlet aligned with the lens of the objective lens.

The beneficial effects of the invention are:
the invention adopts a new structural installation method of X and Y cross roller sliders, so that the random jump in the Z direction can be controlled within 0.2 um, and the X and Y movements are driven by non-rigid direct connection, so that the instability of the moving axis part will not be transmitted to the X and Y moving areas. The vertical adjustment base and fixing method of the lens adopted can ensure that the Z axis does not deflect when moving up and down at high speed. The Z axis grating ruler feeds back from the Y moving base, which can effectively compensate for the instability of the Z axis structure; the three-point supported slide rack adopted can conveniently adjust the level of the slide on the slide rack, and the three-point supported electromagnet is used to adsorb and fix the slide rack, so that the slide rack can be subjected to the minimum force when the X and Y movements are performed. Combining all the above advantages, the invention can greatly improve the control accuracy of the microscope scanner during scanning.

The above description is only an overview of the technical solution of the invention. In order to more clearly understand the technical means of the invention and implement it according to the contents of the specification, the following is a detailed description of the preferred embodiments of the invention in conjunction with the accompanying drawings. The specific implementation of the invention is given in detail by the following embodiments and their accompanying drawings.

### BRIEF DESCRIPTION OF THE DRAWINGS

The drawings described herein are used to provide a further understanding of the invention and constitute a part of this application. The exemplary embodiments of the invention and their descriptions are used to explain the invention and do not constitute an improper limitation of the invention.
FIG. 1 is a front perspective view of the overall structure of the high-precision microscopic scanner according to the invention;
FIG. 2 is a back perspective view of the overall structure of the high-precision microscopic scanner according to the invention;
FIG. 3 is a top perspective view of the machine base in the high-precision microscopic scanner according to the invention;
FIG. 4 is a bottom perspective view of the machine base in the high-precision microscopic scanner according to the invention;
FIG. 5 is a front perspective view of the Y-axis cross roller sliding component according to the invention;
FIG. 6 is a back perspective view of the Y-axis cross roller sliding component according to the invention;
FIG. 7 is an enlarged view of the Y-axis sliding grating component of the Y-axis cross roller sliding component according to the invention;
FIG. 8 is a front perspective view of the Y-axis sliding drive component according to the invention;
FIG. 9 is an enlarged view of the motor of the Y-axis sliding drive component according to the invention;
FIG. 10 is an assembly diagram of the Y-axis sliding drive component and the Y-axis cross roller sliding component according to the invention;
FIG. 11 is a front perspective view of an assembly of the X-axis cross roller sliding component and the Y-axis cross roller sliding component according to the invention;
FIG. 12 is a back perspective view of an assembly of the X-axis cross roller sliding component and the Y-axis cross roller sliding component according to the invention;
FIG. 13 is an enlarged view of the electromagnetic adsorption component in the X-axis cross roller sliding component according to the invention;
FIG. 14 is a front perspective view of the X-axis sliding drive component according to the invention;
FIG. 15 is a back perspective view of the X-axis sliding drive component according to the invention;
FIG. 16 is an assembly diagram of the X-axis sliding drive component and the X-axis cross roller sliding component according to the invention;
FIG. 17 is a perspective view of the glass slide rack component according to the invention after loading the slides;
FIG. 18 is a perspective view of the glass slide rack component according to the invention;
FIG. 19 is an enlarged view of the elastic sheet-spring composite push block structure on the outer side of the glass slide of the glass slide rack component according to the invention;
FIG. 20 is a schematic diagram of the installation position of the lifting and focusing component according to the invention;
FIG. 21 is a perspective view of the lifting and focusing component according to the invention;
FIG. 22 is a front perspective view of the Z-axis sliding component according to the invention;
FIG. 23 is a back perspective view of the Z-axis sliding component according to the invention;
FIG. 24 is an enlarged view of the oil immersion lens component according to the invention;
FIG. 25 is a front perspective view of an assembly of the Y-axis sliding drive component, the Y-axis cross roller sliding component, the X-axis cross roller sliding component, the X-axis sliding drive component, the Z-axis sliding component, and the oil immersion lens component according to the invention;
FIG. 26 is a back perspective view of an assembly of the Y-axis sliding drive component, the Y-axis cross roller sliding component, the X-axis cross roller sliding component, the X-axis sliding drive component, the Z-axis sliding component, and the oil immersion lens component according to the invention;
FIG. 27 is a bottom perspective view of the functional component on the gantry according to the invention;
FIG. 28 is a top perspective view of the functional component on the gantry according to the invention.

### SPECIFIC EMBODIMENT OF THE INVENTION

The invention will be described in detail hereinafter with reference to the drawings and embodiments. The descriptions herein are used to provide a further understanding of the invention and constitute a part of this application. The illustrative embodiments of the invention and their descriptions are used to explain the invention and do not constitute improper limitations on the invention.

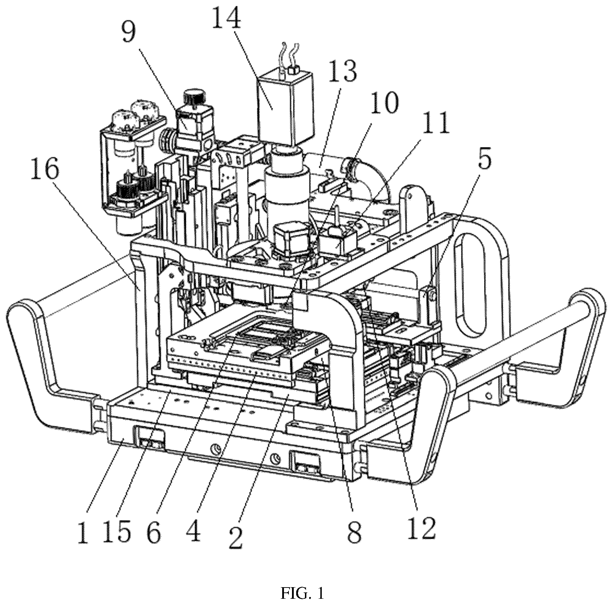

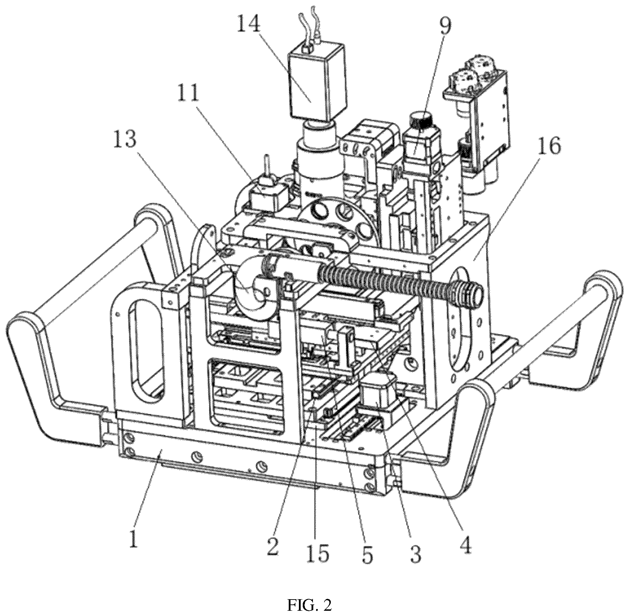

With reference to FIGS. 1-2, a high-precision microscopic scanner, comprising a machine base 1, a Y-axis cross roller sliding component 2, a Y-axis sliding drive component 3, an X-axis cross roller sliding component 4, an X-axis sliding drive component 5, a glass slide rack component 6, a lifting and focusing component 7, a global light source component 8, a Z-axis sliding final assembly component 9, an oil immersion lens component 10, a global camera 11, an upper light source component 12, a fluorescent component 13, and a scanning camera 14.

The Y-axis cross roller sliding component 2 is arranged on the machine base 1 via a ZY axis common base plate 15, and the Y-axis sliding drive component 3 is arranged on one side of the machine base 1 and is connected to the Y-axis cross roller sliding component 2 in transmission; the X-axis cross roller sliding component 4 and the X-axis sliding drive component 5 are both arranged on the Y-axis cross roller sliding component 2, and the X-axis sliding drive component 5 is connected to the Y-axis sliding drive component 4 in transmission; the glass slide rack component 6 and the global light source component 8 are arranged on the X-axis cross roller sliding component 4; the lifting and focusing component 7 is arranged in a middle of the machine base 1 and is located below the glass slide rack component 6; the Z-axis sliding final assembly component 9 is arranged on the ZY-axis common base plate 15 and is located on one side of an assembly of the Y-axis cross roller sliding component 2 and the X-axis cross roller sliding component 4; the oil immersion lens component 10 is arranged on the Z-axis sliding final assembly component 9 and is located above the glass slide rack component 6; the fluorescent component 13 is arranged above an assembly of the Y-axis cross roller sliding component 2 and the X-axis cross roller sliding component 4 via a gantry 16; a lower end of the fluorescent component 13 is connected to the oil immersion lens component 10, and an upper end of the fluorescent component 13 is connected to the scanning camera 14; the global camera 11 and the upper light source component 12 are both arranged on the gantry 16 and located on one side of the fluorescent component 13.

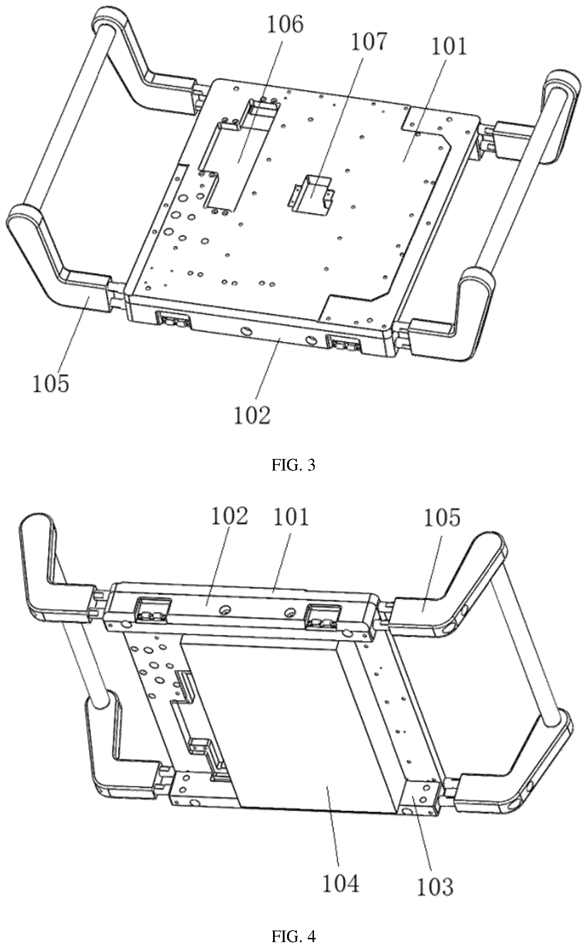

As an embodiment of the invention, with reference to FIGS. 3-4, the machine base 1 comprises a base bottom plate 101, and front and rear sides of a lower surface of the base bottom plate 101 are respectively provided with a bottom plate front support block 102 and a bottom plate rear support block 103; a marble base 104 is provided between the bottom plate front support block 102 and the bottom plate rear support block 103, and the marble base 104 is fixedly fitted to the lower surface of the base bottom plate 101; left and right sides of the base bottom plate 101 are respectively provided with a carrying handle 105, and each carrying handle 105 is respectively fixedly connected to an end of the bottom plate front support block 102 and the bottom plate rear support block 103 on the corresponding side; the base bottom plate 101 is provided with a Y-axis sliding drive component mounting hole 106 for mounting the Y-axis sliding drive component 3 and a lifting and focusing component mounting slot 107 for mounting a bottom structure of the lifting and focusing component 7.

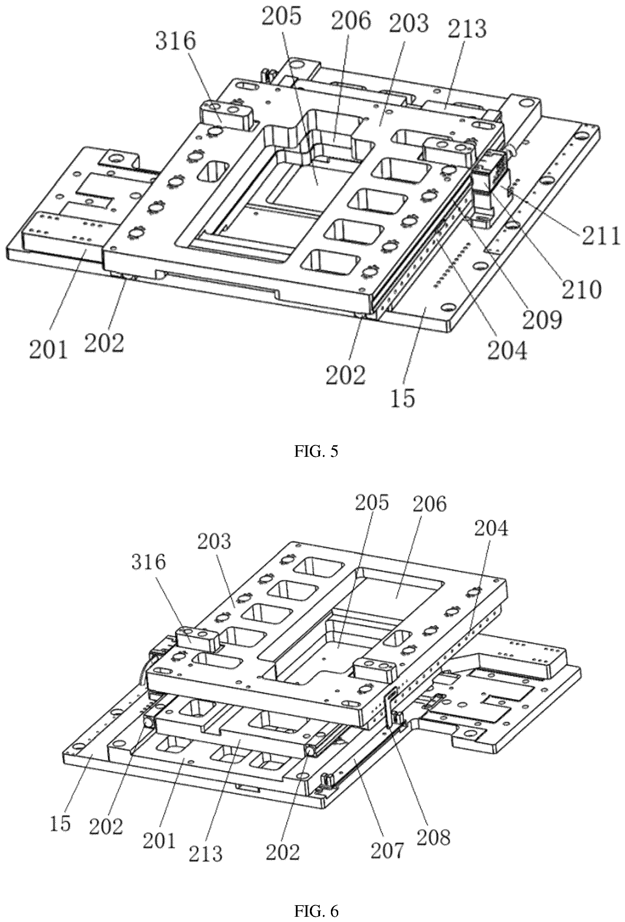

As an embodiment of the invention, with reference to FIGS. 5-6, the Y-axis cross roller sliding component 2 comprises a Y-axis cross roller mounting lower base plate 201 fixed on the ZY-axis common base plate 15; an upper surface of the Y-axis cross roller mounting lower base plate 201 is provided with a Y-axis sliding area upper top plate 203 via two left and right pairs of Y-axis cross roller guide rails 202, and outer side surfaces of the two pairs of Y-axis cross roller guide rails 202 are respectively provided with a Y-axis independent top screw plate 204; the two Y-axis independent top screw plates 204 are respectively fixedly connected to left and right sides of a lower surface of the Y-axis sliding area upper top plate 203, and the top screws of the two Y-axis independent top screw plates 204 are respectively aligned inwardly with outer side surfaces of the two pairs of Y-axis cross roller guide rails 202; at the same time, a Y-axis cross roller backrest limiting plate 213 is provided between the two pairs of the Y-axis cross roller guide rails 202; a lower surface of the Y-axis cross roller backrest limiting plate 213 is fixedly connected to an upper surface of the Y-axis cross roller mounting lower base plate 201, and an upper surface of the Y-axis cross roller backrest limiting plate 213 does not contact the lower surface of the Y-axis sliding area upper top plate 203; left and right side surfaces of the Y-axis cross roller backrest limiting plate 213 are respectively fixedly connected to inner side surfaces of the Y-axis cross roller guide rail 202 on the corresponding sides; under this structure, the spatial parallelism of the two pairs of Y-axis cross roller guide rails 202 is optimal and can withstand large loads.

A middle of the Y-axis cross roller mounting lower base plate 201 is provided with a first focus lens mounting hole 205 for mounting the lifting and focusing component 7; a front and middle part of an upper surface of the Y-axis sliding area upper top plate 203 is an X-axis cross roller sliding component mounting area for mounting the X-axis cross roller sliding component 4, a rear part of an upper surface of the Y-axis sliding area upper top plate 203 is an X-axis sliding drive component mounting area for mounting the X-axis sliding drive component 5, and an upper surface of the Y-axis sliding area upper top plate 203 located between the X-axis cross roller sliding component mounting area and the X-axis sliding drive component mounting area is a Y-axis sliding drive component connection area for connection with the Y-axis sliding drive component in transmission; a middle of the Y-axis sliding area upper top plate 203 and the corresponding position of the Y-axis cross roller backrest limiting plate 213 are both provided with a first focus lens avoidance hole 206 for avoiding a top structure of the lifting and focusing component 7.

Preferably, with reference to FIG. 6, one side of the Y-axis cross roller sliding component 2 is provided with a Y-axis sliding limiting piece for limiting the sliding position of the Y-axis sliding area upper top plate 203 in the Y direction; the Y-axis sliding limiting piece comprises a Y-axis optical coupling limiting plate 207 and a Y-axis optical limiting piece 208 for triggering optical couplers at front and rear ends of the Y-axis optical coupling limiting plate 207; the Y-axis optical coupling limiting plate 207 is arranged on the ZY-axis common base plate 15, the Y-axis optical coupling limiting plate 208 is arranged on an end surface on left or right side of the Y-axis sliding area upper top plate 203, and the Y-axis optical limiting plate 208 corresponds to the position of the Y-axis optical coupling limiting plate 207 up and down.

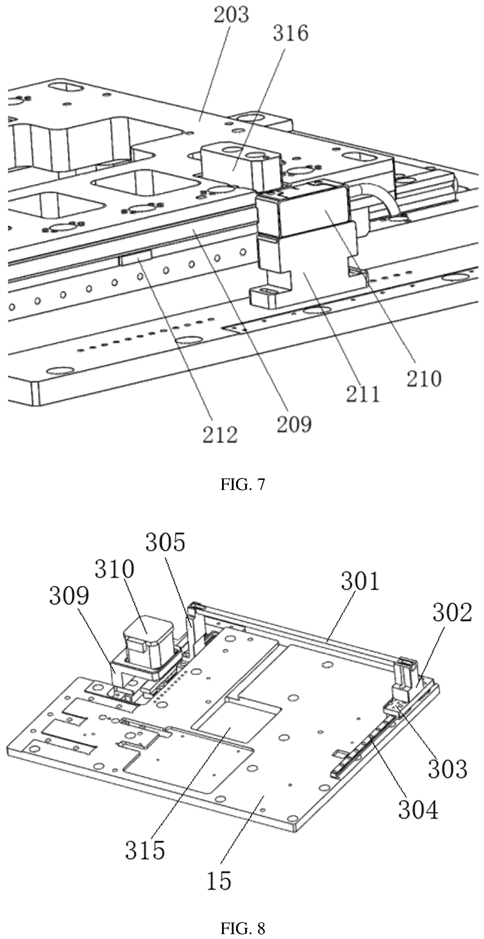

Preferably, with reference to FIGS. 5 and 7, the other side of the Y-axis cross roller sliding component 2 is provided with a Y-axis sliding grating component for sensing the sliding distance of the Y-axis sliding area upper top plate 203 in the Y direction, which comprises a Y-axis grating ruler 209, a Y-axis grating ruler reading head 210, a Y-axis grating ruler reading head bracket 211, and a Y-axis zero position magnet 212; the Y-axis grating ruler reading head 210 is arranged on the ZY axis common base plate 15 through the Y-axis grating ruler reading head bracket 211, the Y-axis grating ruler 209 is arranged on an end surface of left or right side of the Y-axis sliding area upper top plate 203, and the position of the Y-axis grating ruler 209 and the Y-axis grating ruler reading head 210 corresponds to each other on the left and right sides; the Y-axis zero position magnet 212 is located below the Y-axis grating ruler 209 and is fixedly connected to a side end surface of the Y-axis sliding area upper top plate 203.

As an embodiment of the invention, with reference to FIGS. 8-9, the Y-axis sliding drive component 3 comprises a crossbeam rod 301 for flexibly and fixedly connecting with a connection area of the Y-axis sliding drive component.

Right end of the crossbeam rod 301 is fixedly connected to a crossbeam rod right column support block 303 via a crossbeam rod right column 302, and the crossbeam rod right column support block 303 is slidably connected to a Y-axis sliding right rail 304 fixed on the ZY-axis common base plate 15;
left end of the crossbeam rod 301 is fixedly connected to a crossbeam rod left column adapter block 306 via a crossbeam rod left column 305; the crossbeam rod left column adapter block 306 is fixedly connected to a rack fixing plate 307; the rack fixing plate 307 is slidably connected to a Y-axis sliding left rail 314 fixed on a Y-axis motor fixing plate 308; the Y-axis motor fixing plate 308 is located at the Y-axis sliding drive component mounting hole 106 on the base bottom plate 101; the Y-axis motor fixing plate 308 is located at a height lower than the base bottom plate 101, and the Y-axis motor fixing plate 308 is fixedly connected to a lower surface of the base bottom plate 101; the Y-axis motor fixing plate 308 is provided with a Y-axis motor 310 via a Y-axis motor mounting bracket 309, and a motor shaft of the Y-axis motor 310 is provided with a Y-axis gear 311; the rack fixing plate 307 is provided with a Y-axis rack 312, and the Y-axis gear 311 is meshed with the Y-axis rack 312; the rack fixing plate 307 is provided with a spring fixing block 313, and a spring ( not shown) for tightening the rack fixing plate 307 is provided between the spring fixing block 313 and the Y-axis motor fixing plate 308.

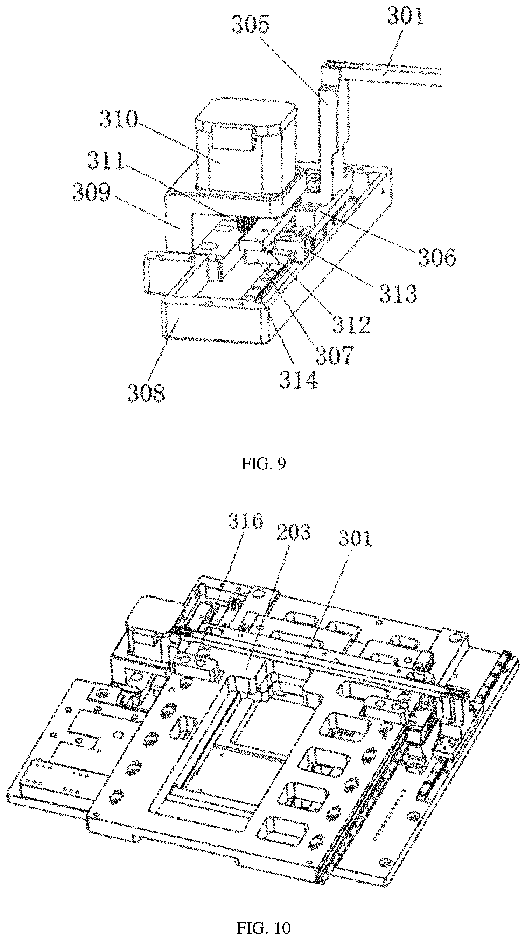

With reference to FIG. 10, the crossbeam rod 301 is clamped and connected to the Y-axis sliding area upper top plate 203 through front and rear soft cushion blocks 316, so that the Y-axis sliding drive component 3 drives the Y-axis cross roller sliding component 2 to slide. The specific process is as follows: the Y-axis motor 310 drives the Y-axis gear 311 to rotate forward or reverse, thereby driving the meshed Y-axis rack 312 to slide forward and backward on the Y-axis sliding left rail 314. The Y-axis rack 312 serves as a power source, and drives the crossbeam rod 301 to move forward and backward in the Y-axis direction through the rack fixing plate 307, the crossbeam rod left column adapter block 306, and the crossbeam rod left column 305. Under the transmission of the crossbeam rod 301, the Y-axis sliding area upper top plate 203 can slide back and forth along the two pairs of Y-axis cross rolling guide rails 202 on the Y-axis cross roller mounting bottom plate 201, thereby driving the X-axis cross roller sliding component 4 and the X-axis sliding drive component 5 located on the Y-axis cross roller sliding component 2 to move in the Y-axis direction, and with the cooperation of the Y-axis sliding limiting component and the Y-axis sliding grating component, the glass slide rack component 6 can be moved stably and accurately in the Y-axis direction.

The Y-axis cross roller sliding component 2 is driven by the Y-axis motor 310, the Y-axis gear 311 and the Y-axis rack 312, and is transmitted by a gantry structure composed of the crossbeam rod 301, the crossbeam rod left column 305, and the crossbeam rod right column 302; the crossbeam rod 301 spans an upper surface of the Y-axis sliding area upper top plate 203 and is clamped and connected to each other with a soft cushion block 316; when the Y-axis sliding drive component 3 drives the Y-axis cross roller sliding component 2, the crossbeam rod 301 and the Y-axis sliding area upper top plate 203 are not rigidly connected, the torsional force between them is not easily transmitted, and the rack fixing plate is tightened on one side by a spring (not shown) to clear the return clearance.

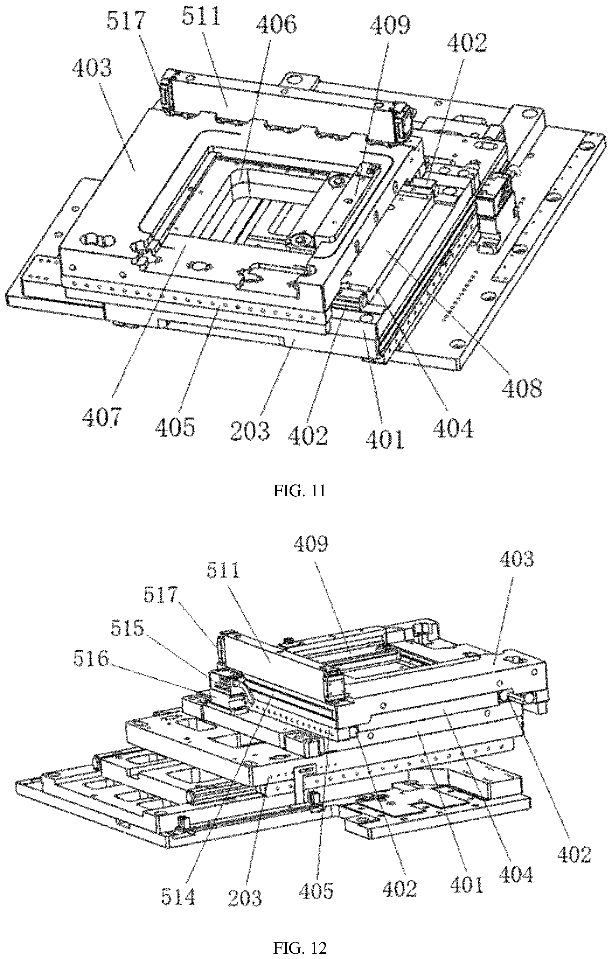

As an embodiment of the invention, with reference to FIGS. 11-12, the X-axis cross roller sliding component 4 comprises a first X-axis cross roller mounting lower base plate 401 fixed to the X-axis cross roller sliding component mounting area on the Y-axis sliding area upper top plate 203, whose upper surface is provided with a first X-axis sliding area upper top plate 403 via two front and rear first X-axis cross roller guide rails 402; the first X-axis sliding area upper top plate 403 is fixedly connected to upper surfaces of the front and rear pairs of the first X-axis cross roller guide rails 402 by means of three fixing screws distributed in a triangle, and at the same time, a plurality of top screws are provided around each of the fixing screws. In this way, the first X-axis sliding area upper top plate 403 is supported on the front and rear two pairs of the first X-axis cross roller guide rails 402 by the top screws around the fixing screws, one pair of the first X-axis cross roller guide rails 402 can be provided with two fixing screws, and the other pair of the first X-axis cross roller guide rails 402 can be provided with one fixing screw. With the principle of three points determining a plane, the horizontality of the first X-axis sliding area upper top plate 403 on the front and rear two pairs of the first X-axis cross roller guide rails 402 can be quickly adjusted by adjusting the top screws around the three fixing screws. Finally, the three fixing screws are tightened to fix the first X-axis sliding area upper top plate 403 and the front and rear two pairs of the first X-axis cross roller guide rails 402. With this structure and mounting method, the first X-axis cross roller guide rail 402 is in a stress-free state in the Z direction, eliminating the influence of the horizontal deviation of the first X-axis sliding area upper top plate 403 caused by the deformation of the first X-axis cross roller guide rail 402, and is suitable for small loads.

An X-axis cross roller backrest limiting plate 404 is provided between the two pairs of the first X-axis cross roller guide rails 402; a lower surface of the X-axis cross roller backrest limiting plate 404 is fixedly connected to an upper surface of the first X-axis cross roller mounting lower base plate 401, and an upper surface of the X-axis cross roller backrest limiting plate 404 does not contact a lower surface of the first X-axis sliding area upper top plate 403; front and rear sides of the X-axis cross roller backrest limiting plate 404 are respectively fixedly connected to inner side surfaces of the front and rear two pairs of the first X-axis cross roller guide rail 402; outer side surfaces of the two pairs of the first X-axis cross roller guide rails 402 are respectively provided with a first X-axis independent top screw plate 405; the two first X-axis independent top screw plates 405 are respectively fixedly connected to front and rear sides of the lower surface of the first X-axis sliding area upper top plate 403, and the top screws of the two first X-axis independent top screw plates 405 are respectively aligned inwardly with outer side surfaces of the two first X-axis cross roller guide rails 402.

A middle of the first X-axis cross roller mounting lower base plate 401 and the corresponding position of the X-axis cross roller backrest limiting plate 404 are both provided with a second focus lens avoidance hole 406 for avoiding the top structure of the lifting and focusing component 7; a middle of the first X-axis sliding area upper top plate 403 is provided with a glass slide rack mounting groove 407 that goes through from top to bottom; a rear part of the first X-axis sliding area upper top plate 403 is an X-axis sliding drive component connection area for connection with the X-axis sliding drive component 5 in transmission; an upper surface of the X-axis cross roller backrest limiting plate 404 is provided with a global light source component mounting groove 408 for fixing the global light source component 8; one part of the global light source component 8 is fixedly connected to the X-axis cross roller backrest limiting plate 404 via the global light source component mounting groove 408, and the other part of the global light source component 8 extends inwardly between the glass slide rack mounting groove 407 and the second focus lend avoidance hole 406.

Preferably, with reference to FIGS. 11-13, one side frame of the glass slide rack mounting groove 407 is provided with an electromagnetic adsorption component 409 for adsorbing the glass slide rack component 6, which comprises an electromagnet mounting seat 4091 fixed on a side frame of the glass slide rack mounting groove 407; an upper surface of the electromagnet mounting seat 4091 is embedded with at least two electromagnet coils 4092, and the electromagnet mounting seat 4091 is provided with an electromagnet terminal 4093 for connecting the electromagnet coils 4092 to an external power supply; an inner side of the electromagnet mounting seat 4091 is embedded with two steel balls 4094 for contacting a side of the glass slide rack component 6, and an upper surface of a frame of the glass slide rack mounting groove 407 on the side opposite to the electromagnet mounting seat 4091 is embedded with a steel ball 4094 for contacting a lower surface of the glass slide rack component 6. Under this structure, the glass slide rack component 6 will be placed on the glass slide rack mounting groove 407 in a three-point supported manner, two of which are located on the electromagnet mounting seat 4091. These two fulcrums are the magnetic output points. After power is turned on, the iron glass slide rack component 6 will be firmly sucked on the three fulcrums, so that the force on the glass slide rack component 6 is minimized when it moves in X and Y directions.

Preferably, with reference to FIG. 12, one side of the X-axis cross roller sliding component 4 is provided with an X-axis sliding grating component for sensing the sliding distance of the first X-axis sliding area upper top plate 403 in the X-direction, which comprises an X-axis grating ruler 514, an X-axis grating ruler reading head 515, an X-axis grating ruler reading head bracket 516, and an X-axis zero position magnet (not shown); the X-axis grating ruler reading head 515 is arranged on the first X-axis cross roller mounting lower base plate 401 through the X-axis grating ruler reading head bracket 516, the X-axis grating ruler 514 is arranged on an end surface of a front side or rear side of the first X-axis sliding area upper top plate 403, and the positions of the X-axis grating ruler 514 and the X-axis grating ruler reading head 515 correspond to each other front and back, and the X-axis zero position magnet (not shown) is located below the X-axis grating ruler 514 and is fixedly connected to a side end surface of the first X-axis sliding area upper top plate 403.

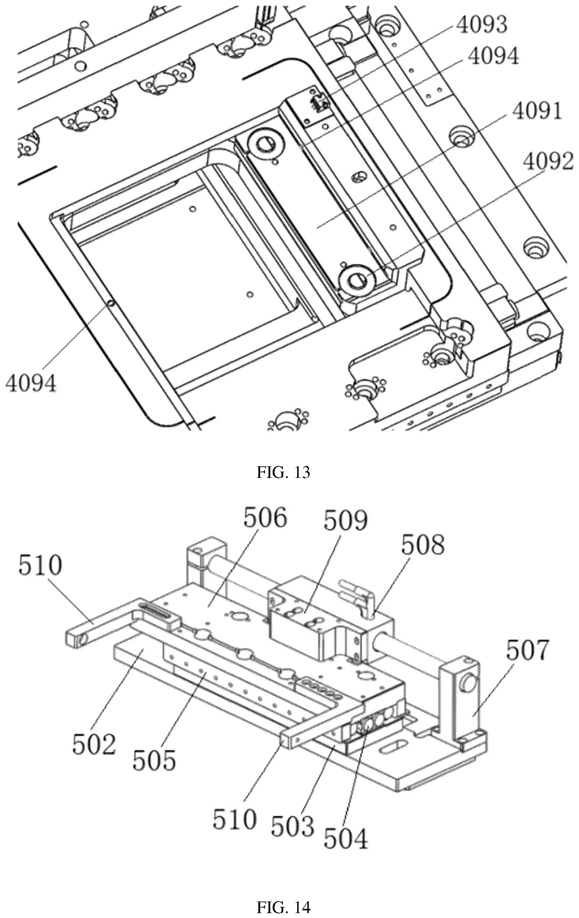

As an embodiment of the invention, with reference to FIGS. 14-15, the X-axis sliding drive component 5 comprises an X-axis cushion clamping plate 501 arranged in the X-axis sliding drive component mounting area at a rear of an upper surface of the Y-axis sliding area upper top plate 203; the X-axis cushion clamping plate 501 is provided with an X-axis power fixing plate 502.

A front part of an upper surface of the X-axis power fixing plate 502 is provided with a second X-axis cross roller mounting lower base plate 503; front and rear sides of an upper surface of the second X-axis cross roller mounting lower base plate 503 are provided with a second X-axis sliding area upper top plate 506 via two pairs of second X-axis cross roller guide rails 504, and outer side surfaces of the two pairs of the second X-axis cross roller guide rails 504 are respectively provided with a second X-axis independent top screw plate 505; the two second X-axis independent top screw plates 505 are respectively fixedly connected to front and rear sides of a lower surface of the second X-axis sliding area upper top plate 506, and the top screws of the two second X-axis independent top screw plates 505 are respectively aligned inwardly with outer side surfaces of the two pairs of second X-axis cross roller guide rails 504.

A rear of an upper surface of the X-axis power fixing plate 502 is provided with an X-axis linear motor 508 via a pair of left and right linear motor mounting seats 507, and the X-axis linear motor 508 is fixedly connected to a rear of the second X-axis sliding area upper top plate 506 via an X-axis movable connecting piece 509; the second X-axis sliding area upper top plate 506 is provided with an X-axis moving push block 510 on both sides

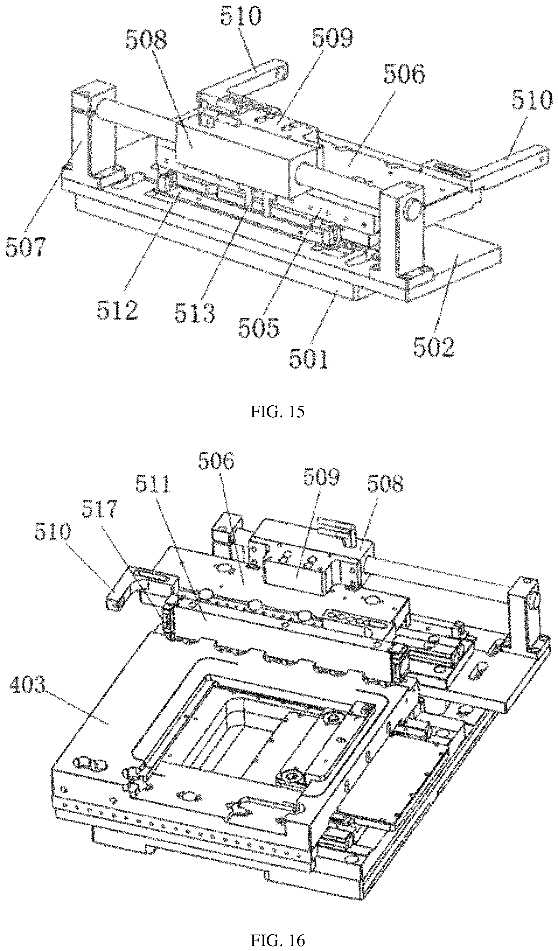

Preferably, with reference to FIG. 15, a rear side of the X-axis sliding drive component 5 is provided with an X-axis sliding limiting component for limiting the sliding position of the second X-axis sliding area upper top plate 506 in the X direction, and the X-axis sliding limiting component comprises an X-axis optical coupling limiting plate 512 and an X-axis optical limiting piece 513 for triggering the optical couplers at front and rear ends of the X-axis optical coupling limiting plate 512. The X-axis optical coupling limiting plate 512 is arranged on the X-axis power fixing plate 502, and the X-axis optical limiting plate 513 is arranged on a rear end surface of the second X-axis sliding area upper top plate 506, and the X-axis optical limiting plate 513 corresponds to the position of the X-axis optical coupling limiting plate 512 in the upper and lower directions.

With reference to FIG. 16, the X-axis sliding drive component connection area at a rear of the first X-axis sliding area upper top plate 403 is provided with an X-axis moving push block fixing piece 511; left and right sides of the X-axis moving push block fixing piece 511 are respectively provided with an X-axis moving push block micro-motion lifting rail 517, and the two X-axis moving push blocks 510 are respectively connected to the two X-axis moving push block micro-motion lifting rails 517, thereby realizing the X-axis sliding drive component 5 driving the X-axis cross roller sliding component 4 to slide. The specific process is as follows: the X-axis linear motor 508 drives the second X-axis sliding area upper top plate 506 to slide left and right along the two pairs of second X-axis cross roller guide rails 504 on the second X-axis cross roller mounting lower base plate 503 through the X-axis movable connecting piece 509; a pair of horn-shaped X-axis movable push blocks 510 on the second X-axis sliding area upper top plate 506 drive the first X-axis sliding area upper top plate 403 to slide left and right along the two pairs of first X-axis cross roller guide rails 402 on the first X-axis cross roller mounting lower base plate 401 by clamping the two ends of the X-axis movable push block fixing piece 511 on the second X-axis sliding area upper top plate 506; and with the cooperation of the X-axis sliding limiting component and the X-axis sliding grating component, the glass slide rack component 6 is moved stably and accurately in the X-axis direction.

The X-axis cross roller sliding component 4 is driven by the X-axis linear motor 508, and the second X-axis sliding area upper top plate 506 of the X-axis cross roller sliding component 4 is mounted on two independent second X-axis cross roller guide rails 504 to lock the swing of the X-axis linear motor 508 when the mover is moving; the X-axis movable push block micro-motion lifting rails 517 at both ends of the X-axis movable push block fixing piece 511 form a slidable hard connection between the X-axis movable push block 510 and the X-axis movable push block fixing piece 511, thereby minimizing the vibration transmitted to the X-axis cross roller sliding component 4 due to the operation of the X-axis sliding drive component 5.

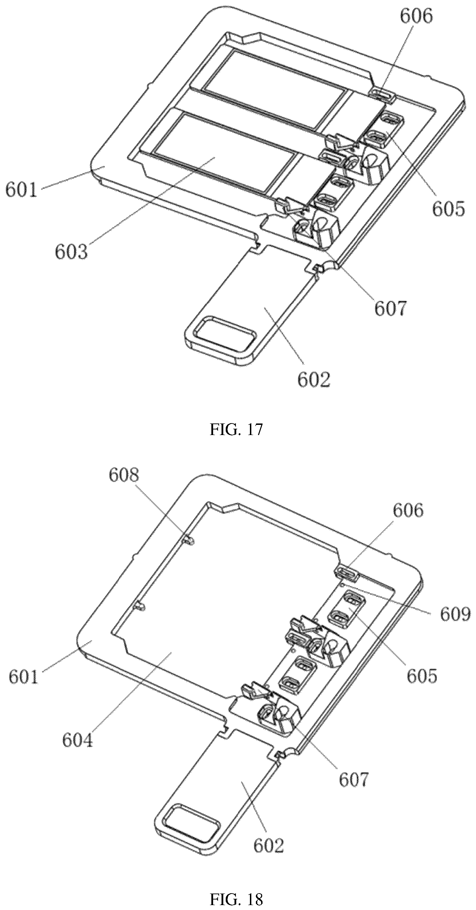

As an embodiment of the invention, with reference to FIGS. 17-19, the glass slide rack component 6 comprises a glass slide rack main board 601, and one side thereof is provided with a glass slide rack handle 602; the glass slide rack main board 601 is provided with at least one glass slide mounting recess 604 for placing a glass slide 603, and a middle part of each glass slide mounting recess 604 is a hollow structure; a frame of each of the glass slide mounting recesses 604 is provided with a glass slide end limiting plate 605, a glass slide inner side support block 606, and a glass slide outer side elastic sheet-spring composite push block structure 607; the glass slide inner side support block 606 and the glass slide outer side elastic sheet-spring composite push block structure 607 are arranged relative to each other; a frame of each glass slide mounting recess 604 is provided with a glass slide bottom support protrusion 608 and two top screw holes 609, and a glass slide top screw is provided in each of the two top screw holes 609; the glass slide bottom support protrusion 608 and the two glass slide top screws are distributed in an inverted triangle. Under this structure, the glass slide 603 is placed in the glass slide mounting recess 604 in a three-point supported manner, the tail of the glass slide 603 is supported by the glass slide bottom support protrusion 608 as one of the fulcrums, and the head of the glass slide 603 is supported by two glass slide top screws as the other two fulcrums, so that the level of the glass slide 603 on the glass slide rack main board 601 can be easily adjusted.

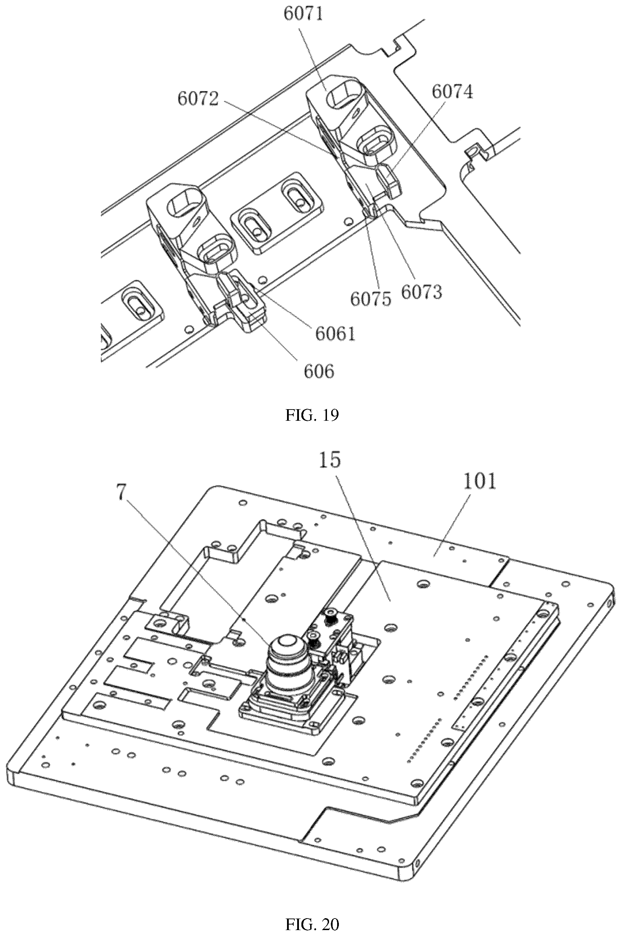

Preferably, with reference to FIG. 19, the glass slide outer spring composite push block structure 607 is composed of a spring fixing frame 6071, a spring 6072, an elastic head 6073, and an elastic head handrail 6074; the spring fixing frame 6071 is fixed to a front end of one side edge of the glass slide mounting recess 604, a front end of the spring 6072 is fixed to a front end of an inner side of the spring fixing frame 6071, the elastic head 6073 is fixed to an inner side of a rear part of the spring 6072, and the elastic head handrail 6074 is fixed to an outer side of the elastic head 6073; an inner side of the elastic head 6073 is provided with a side push contact head 607 in the shape of an inverted triangle; at the same time, the glass slide inner side support block 606 is fixed at a front end of the other side edge of the glass slide mounting recess 604, and is paired with the elastic head 6073 on the left and right, and a support contact head 6061 in the shape of an inverted triangle is provided on one side of the contact surface between the glass slide inner side support block 606 and the glass slide 603. When the glass slide 603 needs to be loaded, the elastic head handrail 6074 is moved outward by toggling the elastic head handrail 6074, thereby opening the glass slide mounting recess 604, and then the glass slide 603 is placed in the glass slide mounting recess 604, and the glass slide end limiting plate 605 and the glass slide inner side support block 606 are used to position it in the X and Y directions, and finally the elastic head handrail 6074 is released. The elastic head 6073 is reset under the action of the restoring force of the spring 6072. While the elastic head 6073 and the glass slide inner side support block 606 clamp the glass slide 603, the inverted triangle-shaped side push contact head 6075 and the support contact head 6061 provide downward pressure for the glass slide 603, thereby ensuring that the glass slide 603 falls on three fulcrums formed by the glass slide bottom support protrusion 608 and two glass slide top screws.

As an embodiment of the invention, with reference to FIGS. 20-21, the lifting and focusing component 7 comprises a T-shaped frame 701; a rear of an upper end surface of the T-shaped frame 701 is provided with a condenser lifting motor 702, and a front of the upper end surface of the T-shaped frame 701 is provided with a ball screw 703; a motor shaft of the condenser lifting motor 702 is provided with a driving wheel 704, and a top of the ball screw 703 is provided with a driven wheel 705; a synchronous belt is wound between the driving wheel 704 and the driven wheel 705; a front surface of a vertical plate of the T-shaped frame 701 is provided with a ball screw auxiliary guide rail 706, and a slider thereon is fixedly connected to a nut on the ball screw 703; the nut of the ball screw 703 is provided with a condenser support plate 708 via a condenser lifting block 707, the condenser support plate 708 is provided with a condenser adjustment upper plate 710 via a condenser adjustment intermediate plate 709, the condenser adjustment upper plate 710 is provided with a condenser 712 via a condenser connection tube 711; one side of the vertical plate of the T-shaped frame 701 is provided with a condenser limiting micro photoelectric switch 713, and the nut of the ball screw 703 is provided with a condenser limiting piece 714 for inductively cooperating with the condenser limiting micro photoelectric switch 713; a lower light source component 715 is provided directly below the condenser support plate 708, and the lower light source component 715 is fixedly connected to the ZY-axis common base plate 15.

With reference to FIG. 8, the ZY-axis common base plate 15 is provided with a second focus lens mounting hole 315 for mounting the lifting and focusing component 7. When the lifting and focusing component 7 is mounted on the machine base 1, a bottom of the lifting and focusing component 7 passes downward through the first focus lens mounting hole 205 in a middle of the Y-axis cross roller mounting lower base plate 201 and the second focus lens mounting hole 315 on the ZY-axis common base plate 15, and is fixedly connected to the lifting and focusing component mounting slot 107 on the base bottom plate 101; a top of the lifting and focusing component 7 extends upward through the first focus lens avoidance hole 206 in a middle of the Y-axis sliding area upper top plate 203, into the second focus lens avoidance hole 406 in a middle of the first X-axis cross roller mounting lower base plate 401, and is aligned with the glass slide rack component 6 on the glass slide rack mounting groove 407 located in a middle of the first X-axis sliding area upper top plate 403. The lifting process of the condenser 712 is as follows: the condenser lifting motor 702 drives the driving wheel 704 to rotate, the driving wheel 704 drives the driven wheel 705 to rotate through a synchronous belt (not shown), and the driven wheel 705 drives the nut on the ball screw 703 to move up and down along its screw, thereby driving the condenser lifting block 707 to move up and down along the ball screw auxiliary guide rail 706; the condenser lifting block 707 drives the condenser 712 to move up and down through the condenser support plate 708, the condenser adjustment intermedia plate 709, the condenser adjustment upper plate 710, and the condenser connecting tube 711, and with the cooperation of the condenser limiting micro photoelectric switch 713 and the condenser limiting plate 714, the condenser 712 can be accurately adjusted up and down.

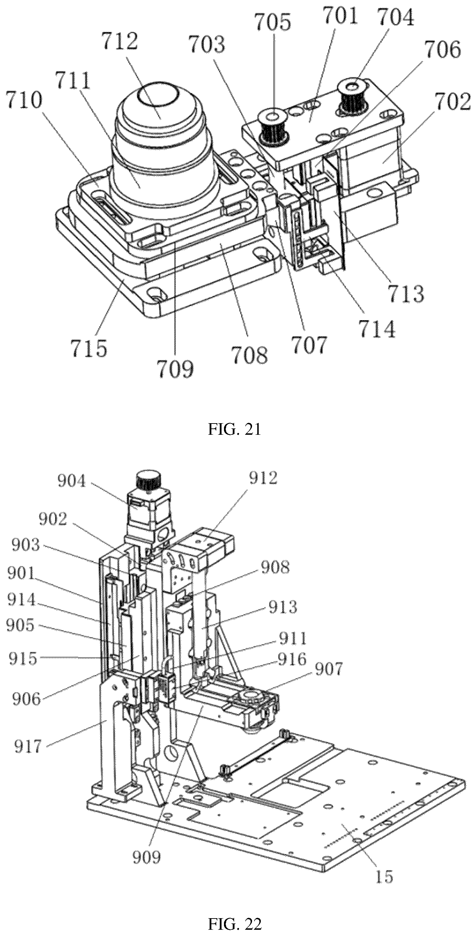

As an embodiment of the invention, with reference to FIGS. 22-23, the Z-axis sliding final-assembly component 9 comprises a Z-axis column 901 fixed on the ZY-axis common base plate 15, and the Z-axis column 901 is located on one side of an assembly of the Y-axis cross roller sliding component 2 and the X-axis cross roller sliding component 4; an inner side surface of the Z-axis column 901 is provided with a Z-axis ball screw 902 via a pair of upper and lower bearing seats, and an inner side surface of the Z-axis column 901 is provided with a Z-axis guide rail 903 parallel to the Z-axis ball screw 902 on the left and right sides; a top of the Z-axis column 901 is provided with a Z-axis drive motor 904, and a motor shaft of the Z-axis drive motor 904 is connected to a top of the screw of the Z-axis ball screw 902; the nut of the Z-axis ball screw 902 is provided with a Z-axis lifting plate 905, and the Z-axis lifting plate 905 is fixedly connected to a slider on the Z-axis guide rail 903; the Z-axis lifting plate 905 is provided with a Z-axis bracket 906, and a side of the Z-axis bracket 906 is provided with a Z-axis cantilever 909 via two pairs of Z-axis cross roller guide rails 908; a top of the Z-axis bracket 906 is provided with a piezoelectric ceramic stack displacement device hanger 912, and a pen-type piezoelectric ceramic stack displacement device 913 is connected between the piezoelectric ceramic stack displacement device hanger 912 and the Z-axis cantilever 909; the Z-axis cantilever 909 is provided with an oil immersion lens mounting hole, which is provided with an oil immersion lens adjustment plate 907; the oil immersion lens adjustment plate 907 is fixedly connected to the Z-axis cantilever 909 via three locking screws distributed in a triangle, and at the same time, one side of each locking screw is provided with a top screw for adjusting the horizontality of the oil immersion lens adjustment plate 907 in the oil immersion lens mounting hole.

Preferably, the Z-axis ball screw 902 is provided with a ball screw adapter, which is fixedly connected to the Z-axis column 901, and an upper part of the Z-axis lifting plate 905 is provided with a Z-axis ball screw upper limiting block that can contact and cooperate with the ball screw adapter.

Preferably, one side of the Z-axis sliding final assembly component 9 is provided with a Z-axis sliding limiting component for limiting the sliding position of the Z-axis lifting plate 905 in the Z direction, which comprises a Z-axis optical coupling limiting plate 914 and a Z-axis optical limiting sheet 915 for triggering the optical couplers at front and rear ends of the Z-axis optical coupling limiting plate 914; the Z-axis optical coupling limiting plate 914 is arranged on the Z-axis column 901, the Z-axis optical limiting sheet 915 is arranged on the Z-axis lifting plate 905, and the positions of the Z-axis optical limiting sheet 915 and the Z-axis optical coupling limiting plate 914 correspond to each other in front and back.

Preferably, the other side of the Z-axis sliding final assembly component 4 is provided with a Z-axis sliding grating component for sensing the sliding distance of the Z-axis cantilever 909 in the Z-direction, which comprises a Z-axis grating ruler 911, a Z-axis grating ruler reading head 916, a Z-axis grating ruler reading head bracket 917, and a Z-axis zero position magnet (not shown); the Z-axis grating ruler reading head 916 is arranged on the Z-axis bracket 906 through the Z-axis grating ruler reading head bracket 917; the Z-axis grating ruler reading head bracket 917 is fixedly connected to the ZY-axis common base plate 15, the Z-axis grating ruler 911 is arranged on the Z-axis cantilever 909, and the positions of the Z-axis grating ruler 911 and the Z-axis grating ruler reading head 916 correspond to each other on the left and right sides, and the Z-axis zero position magnet is located on a left side of the Z-axis grating ruler 911 and is fixedly connected to a side end face of the Z-axis cantilever 909.

Preferably, the pen-type piezoelectric ceramic stack displacement device comprises a compression-resistant cylinder, a piezoelectric ceramic stack, an upper cover cap, a lower nut, a force-bearing nut, a force-bearing nut adapter, and a disc spring; the compression-resistant cylinder is in the shape of a straight tube, the piezoelectric ceramic stack is in the shape of a rod or a stick, and the length of the piezoelectric ceramic stack is variable and arranged in the compression tube; the upper cover cap is arranged at a top port of the compression-resistant cylinder, and an inner side surface of the upper cover cap is fixedly connected to a top of the piezoelectric ceramic stack; the lower nut is arranged at a bottom port of the compression-resistant cylinder, the force-bearing nut is telescopically arranged in the lower nut; an output end of the force-bearing nut is located outside the compression-resistant cylinder, and an input end of the force-bearing nut is located inside the compression-resistant cylinder; the force-bearing nut adapter and the disc spring are both arranged inside the compression-resistant cylinder; an upper end of the force-bearing nut adapter is fixedly connected to a bottom of the piezoelectric ceramic stack, a lower end of the force-bearing nut adapter is fixedly connected to an input end of the force-bearing nut, an upper end of the disc spring contacts a lower end of the force-bearing nut adapter, and a lower end of the disc spring contacts a bottom surface of an inner wall of the lower nut.

The Z-axis sliding final assembly component 9 is responsible for controlling the up and down movement of the microscope lens. The specific process is as follows: the Z-axis driving motor 904 drives the Z-axis lifting plate 905 to move up and down along the Z-axis guide rail 903 on the Z-axis column 901 through the Z-axis ball screw 902, and the Z-axis lifting plate 905 drives the Z-axis cantilever 909 to move up and down in a large range through the Z-axis bracket 906; at the same time, the pen-type piezoelectric ceramic stack displacement device 913 drives the Z-axis cantilever 909 to move up and down along the Z-axis cross roller guide rail 908 on the Z-axis bracket 906 with small precision adjustments, and with the cooperation of the Z-axis sliding limiting component and the Z-axis sliding grating component, it drives the lens to move precisely in the Z-axis direction.

The Z-axis sliding final assembly component 9 is composed of two stages: coarse adjustment and fine adjustment. The coarse adjustment stage is driven by a high-rigidity Z-axis cross roller guide rail 908 and a Z-axis ball screw 902, with a stroke of 30 mm, and is responsible for large step movement; the fine adjustment stage is driven by a pen-type piezoelectric ceramic stack displacement device 913, with a stroke of 100 um, and is responsible for small step movement of the lens.

At the same time, the Z-axis sliding final assembly component 9 is also used to adjust the spatial position of the microscope lens. The microscope lens is mounted on the oil immersion lens adjustment plate 907, and the oil immersion lens adjustment plate 907 is supported by three top screws and fixed to the Z-axis cantilever 909 by three locking screws. The verticality between the oil immersion lens and the glass slide can be adjusted by adjusting the height of the three top screws next to the three locking screws. After the adjustment is completed, tighten the three locking screws and lock them on the Z-axis cantilever 909 with a large torque to ensure that the oil immersion lens does not deflect when the Z-axis moves up and down at high speed.

The Z-axis sliding final assembly component 9 is fixed on the ZY-axis common base plate 15, and the Z-axis grating ruler is fed back from the Y base, which can compensate for the instability of the Z-axis sliding final assembly component 9 to the maximum extent.

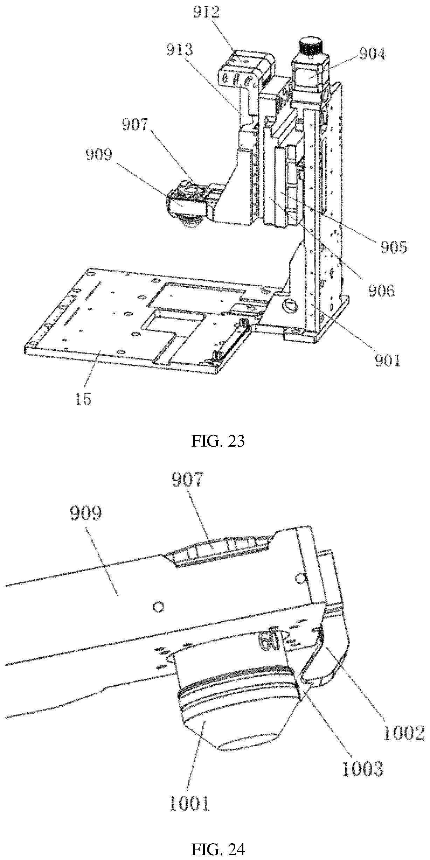

As an embodiment of the invention, with reference to FIGS. 24-26, the oil immersion lens component 10 comprises an objective lens 1001, an elastic oil drip nozzle 1003, and an oil drip nozzle fixing block 1002; the objective lens 1001 is mounted in the oil immersion lens mounting hole 910 on the Z-axis cantilever 909, and is fixedly connected to the oil immersed lens adjustment plate 907; the oil drip nozzle fixing block 1002 is fixed on a lower surface of the Z-axis cantilever 909; the elastic oil drip nozzle 1003 is mounted on the oil drip nozzle fixing block 1002 and is attached to a side wall of the objective lens 1001 through an oil drip tube pressing sheet, with an oil outlet aligned with the lens of the objective lens 1001.

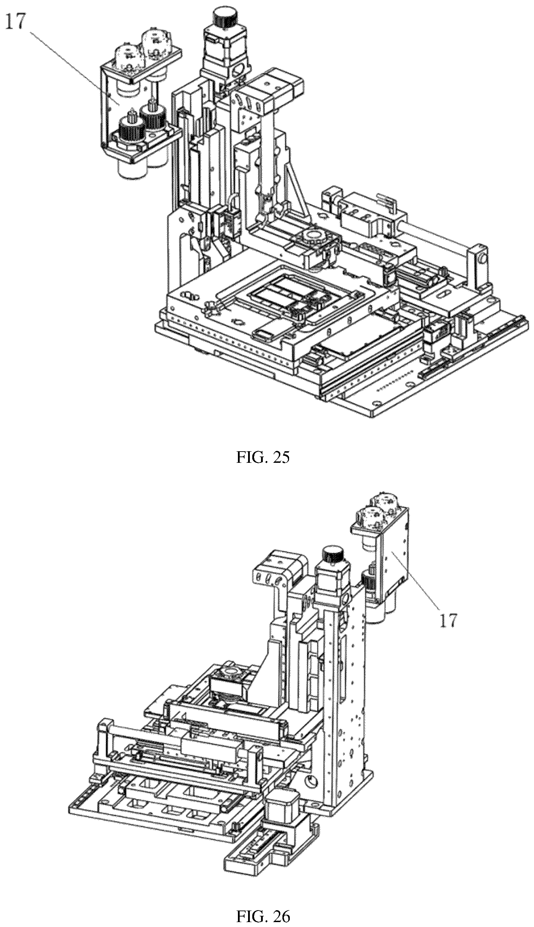

As an embodiment of the invention, with reference to FIGS. 25-26, one side of the Z-axis sliding component 9 is provided with an oil pot component 17, and the oil pot component 17 is connected to the elastic oil drip nozzle 1003 through an oil pipe.

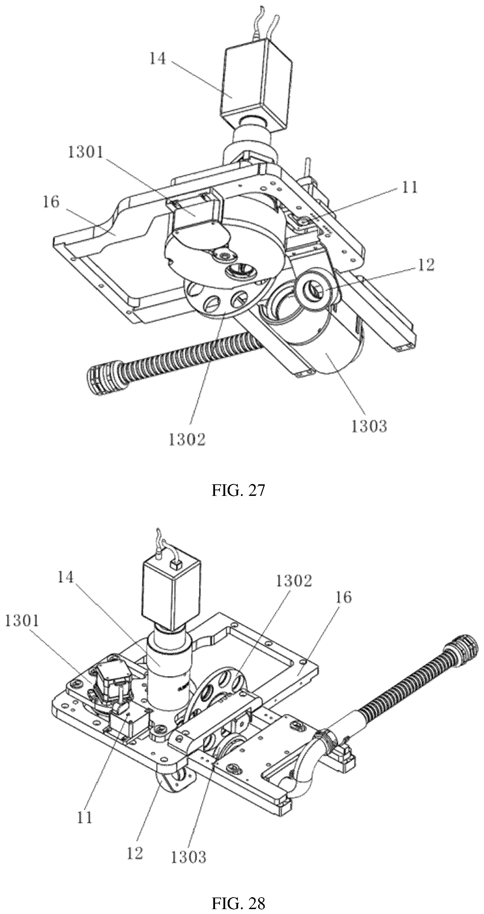

With reference to FIGS. 27-28, the fluorescent component 13 comprises a six-hole wheel component 1301, a fluorescent side turntable 1302, and a fluorescent lamp head 1303; the six-hole turbine disc component 1301, the fluorescent side turntable 1302 and the fluorescent lamp head 1303 are all mounted on the gantry 16; the lower end of the six-hole turbine disc component 1301 is located directly above the objective lens 1001; the scanning camera 14 is fixedly mounted on the gantry 16 and is directed downwardly toward an upper end of the six-hole turbine disc component 1301; the fluorescent lamp head 1303 is directed toward a rear end of the six-hole turbine disc component 1301 through the fluorescent side turntable 1302. Meanwhile, the global camera 11 and the upper light source component 12 are both arranged on the gantry 16 and are both located on one side of the six-hole turbine disc component 1301.

The above description is only a preferred embodiment of the invention and is not intended to limit the invention. For those skilled in the art, the invention may have various modifications and variations.

## Claims

1. A high-precision microscopic scanner, comprising a machine base, a Y-axis cross roller sliding component, a Y-axis sliding drive component, an X-axis cross roller sliding component, an X-axis sliding drive component, a glass slide rack component, a lifting and focusing component, a global light source component, a Z-axis sliding final assembly component, an oil immersion lens component, a global camera, an upper light source component, a fluorescent component, and a scanning camera;
the Y-axis cross roller sliding component is arranged on the machine base via a ZY axis common base plate, and the Y-axis sliding drive component is arranged on one side of the machine base and is connected to the Y-axis cross roller sliding component in transmission; the X-axis cross roller sliding component and the X-axis sliding drive component are both arranged on the Y-axis cross roller sliding component, and the X-axis sliding drive component is connected to the Y-axis sliding drive component in transmission; the glass slide rack component and the global light source component are arranged on the X-axis cross roller sliding component; the lifting and focusing component is arranged in a middle of the machine base and is located below the glass slide rack component; the Z-axis sliding final assembly component is arranged on the ZY-axis common base plate and is located on one side of an assembly of the Y-axis cross roller sliding component and the X-axis cross roller sliding component; the oil immersion lens component is arranged on the Z-axis sliding final assembly component and is located above the glass slide rack component; the fluorescent component is arranged above an assembly of the Y-axis cross roller sliding component and the X-axis cross roller sliding component via a gantry; a lower end of the fluorescent component is connected to the oil immersion lens component, and an upper end of the fluorescent component is connected to the scanning camera; the global camera and the upper light source component are both arranged on the gantry and located on one side of the fluorescent component.

2. The high-precision microscopic scanner of Claim 1, wherein the machine base comprises a base bottom plate, and front and rear sides of a lower surface of the base bottom plate are respectively provided with a bottom plate front support block and a bottom plate rear support block; a marble base is provided between the bottom plate front support block and the bottom plate rear support block, and the marble base is fixedly fitted to the lower surface of the base bottom plate; left and right sides of the base bottom plate are respectively provided with a carrying handle, and each carrying handle is respectively fixedly connected to an end of the bottom plate front support block and the bottom plate rear support block on the corresponding side; the base bottom plate is provided with a Y-axis sliding drive component mounting hole for mounting the Y-axis sliding drive component and a lifting and focusing component mounting slot for mounting a bottom structure of the lifting and focusing component.

3. The high-precision microscopic scanner of Claim 1, wherein the Y-axis cross roller sliding component comprises a Y-axis cross roller mounting lower base plate; an upper surface of the Y-axis cross roller mounting lower base plate is provided with a Y-axis sliding area upper top plate via two left and right pairs of Y-axis cross roller guide rails, and outer side surfaces of the two pairs of Y-axis cross roller guide rails are respectively provided with a Y-axis independent top screw plate; the two Y-axis independent top screw plates are respectively fixedly connected to left and right sides of a lower surface of the Y-axis sliding area upper top plate, and the top screws of the two Y-axis independent top screw plates are respectively aligned inwardly with outer side surfaces of the two pairs of Y-axis cross roller guide rails; at the same time, a Y-axis cross roller backrest limiting plate is provided between the two pairs of the Y-axis cross roller guide rails; a lower surface of the Y-axis cross roller backrest limiting plate is fixedly connected to an upper surface of the Y-axis cross roller mounting lower base plate, and an upper surface of the Y-axis cross roller backrest limiting plate does not contact the lower surface of the Y-axis sliding area upper top plate; left and right side surfaces of the Y-axis cross roller backrest limiting plate are respectively fixedly connected to inner side surfaces of the Y-axis cross roller guide rail on the corresponding sides;
a middle of the Y-axis cross roller mounting lower base plate is provided with a first focus lens mounting hole for mounting the lifting and focusing component; a front and middle part of an upper surface of the Y-axis sliding area upper top plate is an X-axis cross roller sliding component mounting area for mounting the X-axis cross roller sliding component, a rear part of an upper surface of the Y-axis sliding area upper top plate is an X-axis sliding drive component mounting area for mounting the X-axis sliding drive component, and an upper surface of the Y-axis sliding area upper top plate located between the X-axis cross roller sliding component mounting area and the X-axis sliding drive component mounting area is a Y-axis sliding drive component connection area for connection with the Y-axis sliding drive component in transmission; a middle of the Y-axis sliding area upper top plate and the corresponding position of the Y-axis cross roller backrest limiting plate are both provided with a first focus lens avoidance hole for avoiding a top structure of the lifting and focusing component.

4. The high-precision microscopic scanner of Claim 3, wherein the Y-axis sliding drive component comprises a crossbeam rod for flexibly and fixedly connecting with a connection area of the Y-axis sliding drive component; front and rear of the connection area of the Y-axis sliding drive component are respectively provided with a soft cushion block, and the crossbeam rod is clamped and connected to the Y-axis sliding area upper top plate through the front and rear soft cushion blocks;
one end of the crossbeam rod is fixedly connected to a crossbeam rod right column support block via a crossbeam rod right column, and the crossbeam rod right column support block is slidably connected to a Y-axis sliding right rail fixed on the ZY-axis common base plate;
the other end of the crossbeam rod is fixedly connected to a crossbeam rod left column adapter block via a crossbeam rod left column; the crossbeam rod left column adapter block is fixedly connected to a rack fixing plate; the rack fixing plate is slidably connected to a Y-axis sliding left rail fixed on a Y-axis motor fixing plate, and the Y-axis motor fixing plate is fixedly connected to the machine base; the Y-axis motor fixing plate is provided with a Y-axis motor via a Y-axis motor mounting bracket, and a motor shaft of the Y-axis motor is provided with a Y-axis gear; the rack fixing plate is provided with a Y-axis rack, and the Y-axis gear is meshed with the Y-axis rack; the rack fixing plate is provided with a spring fixing block, and a spring for tightening the rack fixing plate is provided between the spring fixing block and the Y-axis motor fixing plate.

5. The high-precision microscopic scanner of Claim 1, wherein the X-axis cross roller sliding component comprises a first X-axis cross roller mounting lower base plate, whose upper surface is provided with a first X-axis sliding area upper top plate via two front and rear first X-axis cross roller guide rails; the first X-axis sliding area upper top plate is fixedly connected to upper surfaces of the front and rear pairs of the first X-axis cross roller guide rails by means of three fixing screws distributed in a triangle, and at the same time, a plurality of top screws are provided around each of the fixing screws for adjusting the horizontality of the first X-axis sliding area top plate on the front and rear pairs of the first X-axis cross roller guide rails;
a X-axis cross roller backrest limiting plate is provided between the two pairs of the first X-axis cross roller guide rails; a lower surface of the X-axis cross roller backrest limiting plate is fixedly connected to an upper surface of the first X-axis cross roller mounting lower base plate, and an upper surface of the X-axis cross roller backrest limiting plate does not contact a lower surface of the first X-axis sliding area upper top plate; front and rear sides of the X-axis cross roller backrest limiting plate are respectively fixedly connected to inner side surfaces of the front and rear two pairs of the first X-axis cross roller guide rail; outer side surfaces of the two pairs of the first X-axis cross roller guide rails are respectively provided with a first X-axis independent top screw plate; the two first X-axis independent top screw plates are respectively fixedly connected to front and rear sides of the lower surface of the first X-axis sliding area upper top plate, and the top screws of the two first X-axis independent top screw plates are respectively aligned inwardly with outer side surfaces of the two first X-axis cross roller guide rails;
a middle of the first X-axis cross roller mounting lower base plate and the corresponding position of the X-axis cross roller backrest limiting plate are both provided with a second focus lens avoidance hole for avoiding the top structure of the lifting and focusing component;
a middle of the first X-axis sliding area upper top plate is provided with a glass slide rack mounting groove that goes through from top to bottom; a rear part of the first X-axis sliding area upper top plate is an X-axis sliding drive component connection area for connection with the X-axis sliding drive component in transmission; an upper surface of the X-axis cross roller backrest limiting plate is provided with a global light source component mounting groove for fixing the global light source component; one part of the global light source component is fixedly connected to the X-axis cross roller backrest limiting plate via the global light source component mounting groove, and the other part of the global light source component extends inwardly between the glass slide rack mounting groove and the second focus lend avoidance hole;
one side frame of the glass slide rack mounting groove is provided with an electromagnetic adsorption component for adsorbing the glass slide rack component, which comprises an electromagnet mounting seat fixed on a side frame of the glass slide rack mounting groove; an upper surface of the electromagnet mounting seat is embedded with at least two electromagnet coils, and the electromagnet mounting seat is provided with an electromagnet terminal for connecting the electromagnet coils to an external power supply;
an inner side of the electromagnet mounting seat is embedded with two steel balls for contacting a side of the glass slide rack component, and an upper surface of a frame of the glass slide rack mounting groove on the side opposite to the electromagnet mounting seat is embedded with a steel ball for contacting a lower surface of the glass slide rack component.

6. The high-precision microscopic scanner of Claim 5, wherein the X-axis sliding drive component comprises an X-axis cushion clamping plate arranged in the X-axis sliding drive component mounting area at a rear of an upper surface of the Y-axis sliding area upper top plate; the X-axis cushion clamping plate is provided with an X-axis power fixing plate, and a front part of an upper surface of the X-axis power fixing plate is provided with a second X-axis cross roller mounting lower base plate; front and rear sides of an upper surface of the second X-axis cross roller mounting lower base plate are provided with a second X-axis sliding area upper top plate via two pairs of second X-axis cross roller guide rails, and outer side surfaces of the two pairs of the second X-axis cross roller guide rails are respectively provided with a second X-axis independent top screw plate; the two second X-axis independent top screw plates are respectively fixedly connected to front and rear sides of a lower surface of the second X-axis sliding area upper top plate, and the top screws of the two second X-axis independent top screw plates are respectively aligned inwardly with outer side surfaces of the two pairs of second X-axis cross roller guide rails;
a rear of an upper surface of the X-axis power fixing plate is provided with an X-axis linear motor via a pair of left and right linear motor mounting seats, and the X-axis linear motor is fixedly connected to a rear of the second X-axis sliding area upper top plate via an X-axis movable connecting piece; the second X-axis sliding area upper top plate is provided with an X-axis moving push block on both sides, and at the same time, the X-axis sliding drive component connection area at a rear of the first X-axis sliding area upper top plate is provided with an X-axis moving push block fixing piece; left and right sides of the X-axis moving push block fixing piece are respectively provided with an X-axis moving push block micro-motion lifting rail, and the two X-axis moving push blocks are respectively connected to the two X-axis moving push block micro-motion lifting rails.

7. The high-precision microscopic scanner of Claim 1, wherein the glass slide rack component comprises a glass slide rack main board, and one side thereof is provided with a glass slide rack handle; the glass slide rack main board is provided with at least one glass slide mounting recess for placing a glass slide, and a middle part of each glass slide mounting recess is a hollow structure; a frame of each of the glass slide mounting recesses is provided with a glass slide end limiting plate, a glass slide inner side support block, and a glass slide outer side elastic sheet-spring composite push block structure; the glass slide inner side support block and the glass slide outer side elastic sheet-spring composite push block structure are arranged relative to each other; a frame of each glass slide mounting recess is provided with a glass slide bottom support protrusion and two top screw holes, and a glass slide top screw is provided in each of the two top screw holes; the glass slide bottom support protrusion and the two glass slide top screws are distributed in an inverted triangle.

8. The high-precision microscopic scanner of Claim 1, wherein the lifting and focusing component comprises a T-shaped frame; a rear of an upper end surface of the T-shaped frame is provided with a condenser lifting motor, and a front of the upper end surface of the T-shaped frame is provided with a ball screw; a motor shaft of the condenser lifting motor is provided with a driving wheel, and a top of the ball screw is provided with a driven wheel; a synchronous belt is wound between the driving wheel and the driven wheel; a front surface of a vertical plate of the T-shaped frame is provided with a ball screw auxiliary guide rail, and a slider thereon is fixedly connected to a nut on the ball screw; the nut of the ball screw is provided with a condenser support plate via a condenser lifting block, the condenser support plate is provided with a condenser adjustment upper plate via a condenser adjustment intermediate plate, the condenser adjustment upper plate is provided with a condenser via a condenser connection tube; one side of the vertical plate of the T-shaped frame is provided with a condenser limiting micro photoelectric switch, and the nut of the ball screw is provided with a condenser limiting piece for inductively cooperating with the condenser limiting micro photoelectric switch; a lower light source component is provided directly below the condenser support plate, and the lower light source component is fixedly connected to the ZY-axis common base plate.

9. The high-precision microscopic scanner of Claim 1, wherein the Z-axis sliding final-assembly component comprises a Z-axis column fixed on the ZY-axis common base plate, and the Z-axis column is located on one side of an assembly of the Y-axis cross roller sliding component and the X-axis cross roller sliding component; an inner side surface of the Z-axis column is provided with a Z-axis ball screw via a pair of upper and lower bearing seats, and an inner side surface of the Z-axis column is provided with a Z-axis guide rail parallel to the Z-axis ball screw on the left and right sides; a top of the Z-axis column is provided with a Z-axis drive motor, and a motor shaft of the Z-axis drive motor is connected to a top of the screw of the Z-axis ball screw; the nut of the Z-axis ball screw is provided with a Z-axis lifting plate, and the Z-axis lifting plate is fixedly connected to a slider on the Z-axis guide rail; the Z-axis lifting plate is provided with a Z-axis bracket, and a side of the Z-axis bracket is provided with a Z-axis cantilever via two pairs of Z-axis cross roller guide rails; a top of the Z-axis bracket is provided with a piezoelectric ceramic stack displacement device hanger, and a pen-type piezoelectric ceramic stack displacement device is connected between the piezoelectric ceramic stack displacement device hanger and the Z-axis cantilever; the Z-axis cantilever is provided with an oil immersion lens mounting hole, which is provided with an oil immersion lens adjustment plate; the oil immersion lens adjustment plate is fixedly connected to the Z-axis cantilever via three locking screws distributed in a triangle, and at the same time, one side of each locking screw is provided with a top screw for adjusting the horizontality of the oil immersion lens adjustment plate in the oil immersion lens mounting hole.

10. The high-precision microscopic scanner of Claim 9, wherein the oil immersion lens component comprises an objective lens, an elastic oil drip nozzle, and an oil drip nozzle fixing block; the objective lens is mounted in the oil immersion lens mounting hole on the Z-axis cantilever, and is fixedly connected to the oil immersed lens adjustment plate; the oil drip nozzle fixing block is fixed on a lower surface of the Z-axis cantilever; the elastic oil drip nozzle is mounted on the oil drip nozzle fixing block and is attached to a side wall of the objective lens through an oil drip tube pressing sheet, with an oil outlet aligned with the lens of the objective lens.
